# EUROPEAN PATENT SPECIFICATION

(11) **EP 2 554 458 B1**
(45) Date of publication and mention of the grant of the patent: **14.02.2018**
(21) Application number: 12005425.9
(22) Date of filing: 25.07.2012
(51) Int. Cl.: B62D 21/14, B62D 61/12

(54) **Modular system for supporting industrial vehicle, trucks in particular**
System modularer projektierung begleit fahrzeuge, insbesondere Trucks
Système de véhicules de soutien modulaires conception, camions en particulier

(30) Priority: 01.08.2011 IT PE20110010
(43) Date of publication of application: 06.02.2013
(73) Proprietor: Mario, Scurti, 65100 Pescara (IT)
(72) Inventor: Mario, Scurti, 65100 Pescara (IT)
(74) Representative: Rozzi, Giuseppe

(56) References cited:
- EP-A1- 1 245 476
- EP-A1- 1 634 798
- EP-A1- 2 192 026
- WO-A1-2011/023868
- DE-A1- 10 045 748
- DE-U1-202006 003 228
- US-B1- 6 199 894
- US-B1- 6 779 617

## Description

The present invention concerns a modular support system for industrial vehicle bodies, in particular trucks.

More in detail, the invention concerns a modular system of the said type, by virtue of which a same industrial vehicle, in particular a same truck, can be modified in such a way as to be equipped with bodies of different types and lengths.
Within the scope of the present invention, the term body indicates a plurality of devices contributing to make the truck able to meet a specific function (transport of solid material, transport of liquid material, transport of vehicles or industrial devices such as, for example, cranes or other dump trucks).

Technological progress has also brought big changes to the world of truck bodies. In the past, industrial vehicle manufacturers built trucks with different engines and in different sizes, varying the number of wheel axles according to the different intended uses, in quarries, for local national transport, etc. Consequently, the customer purchased the vehicle according to transport requirements and type of body to be made and so the number of axles and chassis lengths varied. Consequently, once the body was made, it could no longer be changed. The only exception consisted of articulated vehicles, which could be coupled with different semi-trailers and, therefore, could change body.

In the Sixties-Eighties, industrial motor vehicles were mainly equipped with fixed bodies. Afterwards, in the Nineties, industrial vehicles started to be made equipped with roll-off bodies, while since the year 2000 vehicles have been made equipped with interchangeable bodies. Currently therefore, technology allows changing the body of an industrial vehicle, in particular a truck, using quick coupling systems. A truck can therefore quickly change body, switching from, for example, an open bed to a tank, to a concrete mixer and a flatbed with crane. These new bodies can even be shared with other trucks in just 5 minutes. In this context, the patent US6199894B1 discloses an apparatus for supporting industrial vehicle comprising one dual-axle or one three-axle tractor and an extended frame that can be a short frame without wheels or with one axles. Such an extended frame is provided only with means that are situated at the front of said extended frame and are configured for coupling the extended frame with the tractor.

It is also known that the cost of operating a motor vehicle is high and that many companies, to meet the requests of their customers, are obliged to purchase trucks with different characteristics and to shoulder high operating costs.

In the light of the above, it is clearly necessary to have access to a solution which permits equipping an industrial vehicle with both a short and a long body, without incurring excessive costs.

The solution according to the present invention, as defined by independent claim 1, fits into this context, providing a modular system which is practical thanks to its simple extension of the truck chassis, conveniently adaptable to different types of basic trucks.

Object of the present invention is therefore the making of a modular support system for industrial vehicle bodies, in particular trucks, which overcome the limits of the solutions based on the known technology and obtain the previously-described technical results.

A further object of the invention is the possibility of producing said modular system at substantially low costs, as regards production costs and operating costs.

Last but not least, another object of the invention is the production of a modular support system for industrial vehicle bodies, in particular trucks, which is considerably simple, safe and reliable. A specific object of the present invention is therefore a modular support system for industrial vehicle bodies, in particular trucks, which comprises a
basic modular element consisting of a flatbed, more in particular a short flatbed, which can be without wheels or alternatively have an axle with steering wheels or with dual wheels; or a long flatbed having two axles, chosen between the axles with steering wheels and the axles with dual wheels, each basic modular element being equipped with coupling means with two adjacent basic modular elements, in front and rear position respectively.

Furthermore, according to the present invention, each module can be equipped with means for fitting bodies such as, for example, an open bed, a tank, a concrete mixer, a crane or other dump trucks and/or means for fitting coupling systems for trailers, such as, for example, a fifth wheel or a bar.

The present invention will now be described by way of example only, without any intention of being limitative, according to its preferred embodiments, with particular reference to the illustrations of the attached drawings, wherein:
- figures 1a and 1b show a side view and a view from above respectively of a dual-axle tractor of common type, chosen by way of example and without any intention of wanting to limit the scope of the invention to any particular type of prime-mover,
- figures 2a and 2b show a side view and a view from above, respectively, of a first module of the modular system according to the present invention, in particular of an extension chassis,
- figures 3a and 3b show a side view and a view from above, respectively, of a second module of the modular system according to the present invention, in particular of a chassis with a steering-wheel axle,
- figures 4a and 4b show a side view and a view from above, respectively, of a third module of the modular System according to the present invention, in particular of a chassis with a dual-wheel axle,
- figures 5a and 5b show a side view and a view from above, respectively, of a fourth module of the modular system according to the present invention, in particular of a chassis with two axles, a first dual-wheel axle and a second steering-wheel axle respectively,
- figures 6a and 6b show a side view and a view from above, respectively, of a fifth module of the modular system according to the present invention, in particular of a chassis with two axles, both with dual wheels,
- figures 7a and 7b show a side view and a view from above, respectively, of a modular solution consisting of the coupling of the module shown in figures 4a and 4b with the module shown in figures 3a and 3b,
- figures 8a and 8b show a side view and a view from above, respectively, of a modular solution consisting of the coupling of the module shown in figures 4a and 4b with a second identical module, which is in turn coupled with the module shown in figures 3a and 3b,
- figures 9a and 9b show a side view and a view from above, respectively, of a modular solution consisting of the coupling of the module shown in figures 6a and 6b with the module shown in figures 3a and 3b,
- figures 10a and 10b show a side view and a view from above, respectively, of a modular solution consisting of the coupling of the module shown in figures 4a and 4b with the module shown in figures 5a and 5b,
- figures 11 a and 11b show a side view and a view from above, respectively, of a modular solution consisting of the coupling of the module shown in figures 6a and 6b with the module shown in figures 4a and 4b,
- figures 12a and 12b show a side view and a view from above, respectively, of the dual-axle tractor with two axles shown in figures 1a and 1b to which is fitted the module shown in figures 3a and 3b,
- figures 13a and 13b show a side view and a view from above, respectively, of the dual-axle tractor shown in figures 1a and 1b to which is fitted the module shown in figures 4a and 4b,
- figures 14a and 14b show a side view and a view from above, respectively, of the dual-axle tractor shown in figures 1a and 1b to which is fitted the modular solution shown in figures 7a and 7b,
- figure 15 shows a side view of a fifth wheel,
- figure 16 shows a side view of a flatbed,
- figure 17 shows a side view of a modular solution obtained by coupling the tractor shown in figures 1a and 1b, in succession with the fifth wheel of figure 15, in turn coupled with the flatbed of figure 16, coupled in turn with the modular element of figures 5a and 5b,
- figure 18 shows a side view of a drawbar,
- figure 19 shows a side view of a modular solution obtained by coupling the tractor shown in figures 1a and 1b, in succession with the drawbar of figure 18, in turn coupled with the dual-axle trailer,
- figures 20a-20e show different bodies which can be directly coupled with the tractor shown in figures 1a and 1b, and
- figures 21a-21d show different bodies which can be directly coupled with the modular solution shown in figures 14a and 14b.

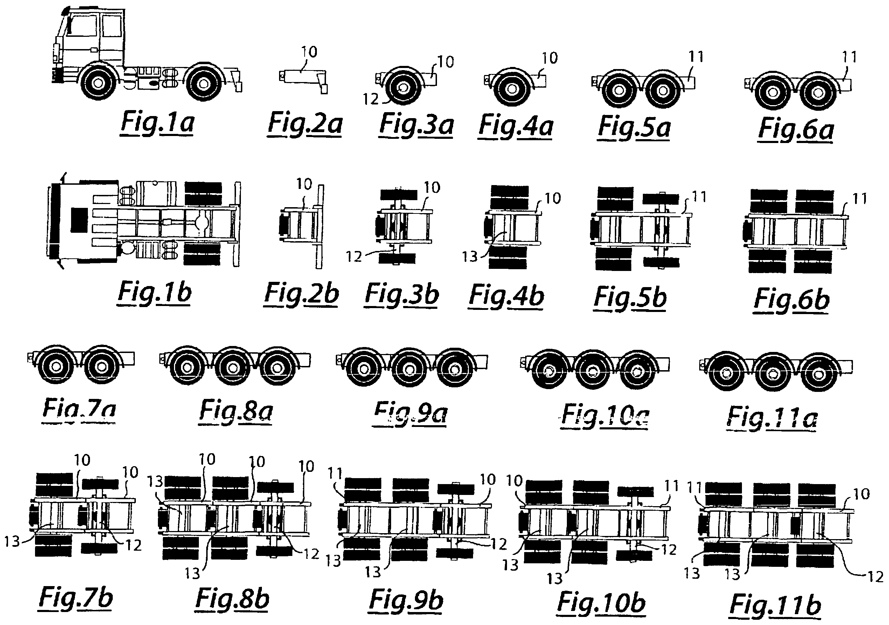

With reference to the illustrations, at the basis of the present invention an additional module is proposed to be coupled with an industrial vehicle, for example, a truck like the one shown in figures 1 a and 1b, with the possibility of equipping the vehicle with both short and long bodies. This module is nothing more than an extension of the truck chassis. In particular, this module can be of various types, thereby forming a real modular system of interlinked elements. Indeed, with reference to the illustrations, the basic modular element of the modular system of the present invention consists of a flatbed, more in particular a short flatbed (10), which can be without wheels or alternatively have an axle with steering wheels (12) or an axle with dual wheels (13); or a long flatbed (11) having two axles, chosen between the axles with steering wheels (12) and the axles with dual wheels (13), each basic modular element also having means of coupling with two adjacent basic modular elements, in front and rear position respectively.

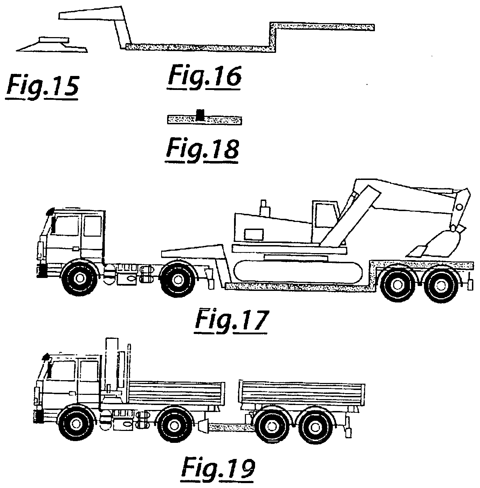

More in particular, the different types of module comprise: a simple chassis (fig. 2a, 2b) to extend that base one; a chassis with an axle with steering wheels (fig. 3a, 3b); a chassis with an axle with dual wheels (fig. 4a, 4b); a chassis with 2 axles (one with dual wheels and the other with steering wheels)(fig. 5a, 5b); a chassis with 2 axles, both with dual wheels (fig. 6a, 6b). Furthermore, the modular system of the present invention allows realizing other combinations including with several axles, by coupling together several modules(fig. 7a, 7b; 8a, 8b; 9a, 9b; 10a, 10b; 11a, 11b). The additional module, with a number of accessories, such as, for example, a mobile fifth wheel (fig. 15) and a flatbed (fig. 16), or a drawbar (fig. 18), can also become the part of the axles of a semi-trailer or trailer.

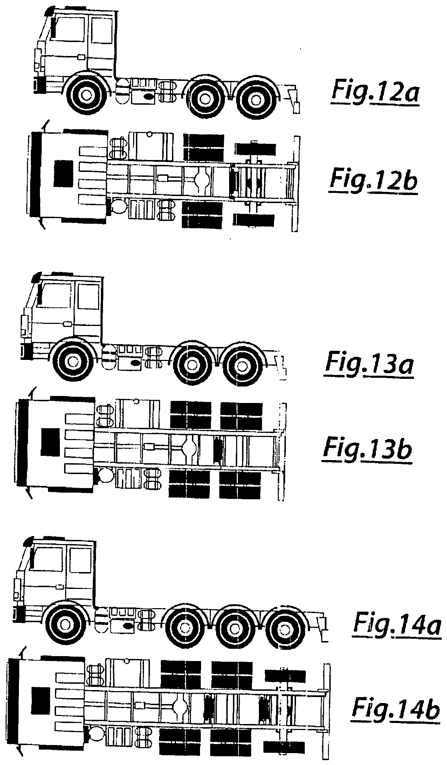

For example, if we consider a dual-axle tractor (fig. 1a, 1b), with a full load capacity of 18000 kg and an additional module coupled on the rear with a steering axle (fig. 3a, 3b), the result is a motor vehicle with a full load capacity of 26000 kg (fig. 12a, 12b). If, instead, to the tractor of 18000 kg (fig. 1a, 1b) a dual-axle module is coupled (fig. 4a, 4b), the result is a 33000 kg vehicle (fig. 13a, 13b). If again, always to the same 18000 kg tractor (fig. 1a, 1b)a double-axle module consisting of a dual axle and a steering axle is attached (fig. 7a, 7b), a 38000 kg vehicle can be realized (fig. 14a, 14b). Furthermore, always by way of example, this latter four-axle vehicle could have as accessory a mobile fifth wheel (fig. 15) and a flatbed (fig. 16), and would therefore become a dual-axle tractor with a dual-axle semi-trailer (fig. 17). Alternatively, by adding a drawbar (fig. 18), a dual-axle tractor would be obtained with a dual-axle articulated trailer (fig. 19). The dual-axle trailer shown in figure 19 has therefore been made from an additional dual-axle module with an accessory bar. It is obvious that on this configuration, various structural bodies can be integrated depending on use, just as it is equally obvious that the modules according to the present invention, with the addition of diverse accessories (such as, for example, but not limited to, the mobile fifth wheel of figure 15 and the flatbed of figure 16), can be used to realize different types of trailers, articulated trailers, and semi-trailers. Moreover, these trailers can be combined together to form even longer articulated vehicles, such as the so-called "road trains", currently only used in Australia, but which could soon also be introduced in Europe, in the event of the length limits laid down by law being increased (a decision in this sense appears to be currently likely).

It is immediately evident that the usefulness of this solution would have positive effects on the transport company business.

Imagining an earthmoving machinery company run by just one person, which requires a small truck to do jobs in old-town centers, in villa and condominium gardens, and at the same time also a large truck to perform large excavations, with this fleet of vehicles, the company should pay two road taxes, two insurances, maintenance of two vehicles, but above all it should purchase two trucks.

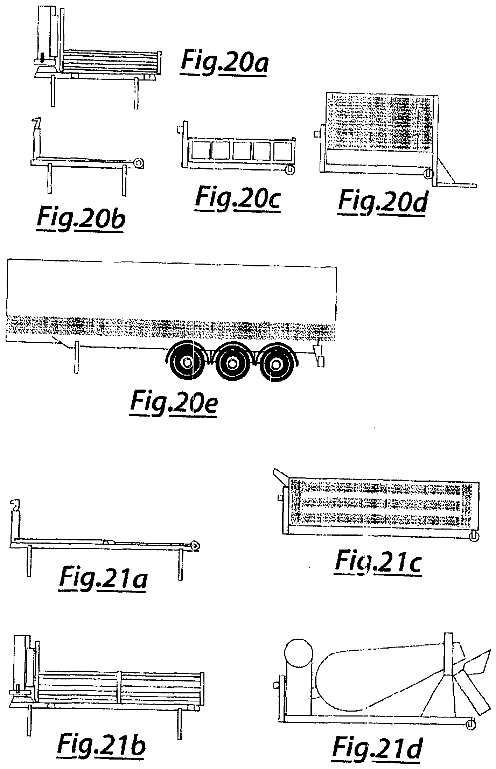

Thanks to the modular system of the present invention, the company would instead buy a dual-axle short wheelbase tractor (fig.1a, 1b),equipped with an interchangeable body with a dump body (fig.20b). Moreover, it would buy a double-axle module (fig. 5a,5b; or fig. 6a,6b; or again fig. 7a,7b) to be coupled and another interchangeable body with dump body(fig.21a), suitable for the new length and the new capacity of the vehicle. This way, the company, owning just one vehicle, would save on road taxes, insurance and maintenance costs. In the event of the company also operating in other sectors, it could equip the vehicle with other structures such as a box body (short or long), a flatbed for transporting dump trucks (with semi-trailer or four-axle), thus cutting investment considerably.

Manufacturing companies could also produce fewer types of vehicles and more accessory axles, saving time on the assembly lines, and, above all, could sell to the road-hauler, including after the purchase of the vehicle, an axle module should new needs arise.

The modular system of the invention also benefits the circulation of vehicles: often , if a company cannot afford a new vehicle, it purchases a second-hand vintage vehicle, which is more likely to break down on the road and cause accidents. From an environmental viewpoint, there would also be fewer vehicles to scrap and therefore less oils, tires and metals to dispose of.

The present invention has been described in an illustrative, but not limitative way, according to its preferred embodiments, but it must be understood that variations and/or changes car be made by experts in the field without departing from the relative scope of protection, as defined by the attached claims.

## Claims

1. Modular system for supporting industrial vehicle mountings, trucks in particular, comprising a dual-axle tractor and at least one of the following base modular elements:
• short chassis without wheels;
• short chassis (10) with one axle and steering wheels (12);
• short chassis (10) with one axle and double wheels (13);
• long chassis (11) with two axles with steering wheels (12);
• long chassis (11) with two axles with double wheels (13);
**characterized in that** each base modular element is provided with means for coupling with two adjacent base modular elements, respectively at the front and rear.

2. Modular system according to claim 1, wherein said at least one base modular element is provided with means for the application of mountings, such as a tank, a cistern, a concrete mixer, a crane or other operative devices.

3. Modular system according to claim 1 or 2, wherein said at least one modular element is provided with means for the application of coupling devices for trailers, such as a fifth wheel or a rod.

## Patentansprüche

1. Modulares Systeme für die Unterstützung von Befestigungselementen für Nutzfahrzeuge, insbesondere LKW, bestehend aus Zweiachszugmaschine und mindestens einem der folgenden modularen Basiselemente:
- kurzes Chassis ohne Räder (12);
- kurzes Chassis (10) mit einer Achse und Steuerrädern (12);
- kurzes Chassis (10) mit einer Achse und doppelten Rädern (13),
- langes Chassis (11) mit zwei Achsen und Steuerrädern (12);
- langes Chassis (11) mit zwei Achsen und doppelten Rädern (13);
**gekennzeichnet dadurch, dass** jedes modulares Basiselement ausgestattet ist mit Mitteln zur Verkoppelung von zwei angrenzenden modularen Basiselemente vorne bzw. hinten.

2. Modulares System gemäß Anspruch 1, wobei mindestens ein modulares Basiselement mit Mitteln für die Anbringung von Aufbauelementen ausgestattet ist, wie einem Tank, einer Zisterne, einem Betonmischer, einem Kran oder anderer Betriebsgeräte.

3. Modulares System gemäß Anspruch 1 oder 2, wobei mindestens ein modulares Element mit Mitteln für die Anbringung von Verbindungsvorrichtungen für Anhänger ausgestattet ist, wie ein fünftes Rad oder eine Stange.

## Revendications

1. Système modulaire pour soutenir les supports de véhicules industriels, en particulier de camions, comprenant un tracteur à deux essieux et au moins l'un des éléments modulaires de base suivants :
- châssis court sans roues;
- châssis court (10) avec un essieu et des roues directrices (12) ;
- châssis court (10) avec un essieu et des roues jumelées (13) ;
- châssis long (11) avec deux essieux avec roues directrices (12) ;
- châssis long (11) avec deux essieux à roues jumelées (13) ;
**caractérisés par le fait que** chaque élément modulaire de base est équipé de moyens de couplage avec deux éléments modulaires de base adjacents, respectivement à l'avant et à l'arrière.

2. Système modulaire selon la revendication 1, dans lequel au moins un élément modulaire de base est équipé de moyens pour l'application de supports, tels qu'un réservoir, une citerne, une bétonnière, une grue, ou d'autres dispositifs opérationnels.

3. Système modulaire selon la revendication 1 ou 2, dans lequel au moins un élément modulaire de base est équipé de moyens pour l'application de dispositifs de couplage pour des remorques, tels qu'une cinquième roue ou une bielle.
